# EUROPÄISCHE PATENTSCHRIFT

(11) **EP 2 110 241 B1**
(45) Veröffentlichungstag und Bekanntmachung des Hinweises auf die Patenterteilung: **25.06.2014**
(21) Anmeldenummer: 09005022.0
(22) Anmeldetag: 04.04.2009
(51) Int. Cl.: B32B 27/32

(54) **Verbundmaterial, insbesondere für Verschlusselemente an Windeln, mit hohem Dehnungsvermögen und semielastischen Eigenschaften**
Compound material, in particular for highly extendable and semi-elastic closing elements on nappies
Matériau composite, notamment pour éléments de fermeture sur des couches, ayant une capacité d'extension élevée et des propriétés semi-élastiques

(30) Priorität: 15.04.2008 DE 102008019030
(43) Veröffentlichungstag der Anmeldung: 21.10.2009
(73) Patentinhaber: Mondi Consumer Packaging Technologies GmbH, 48599 Gronau (DE)
(72) Erfinder: Schönbeck, Marcus, 33775 Versmold (DE)
(74) Vertreter: Albrecht, Rainer Harald

(56) Entgegenhaltungen:
- WO-A-2007/061486
- US-A1- 2003 022 582

## Beschreibung

Die Erfindung betrifft ein Verbundmaterial, gemäß dem Oberbegriff des Anspruchs 1.

Das Verbundmaterial kann beispielsweise als Verschlussstreifen für elastische Babywindeln oder als elastische Seitenteile an einer Windel verwendet werden. Das Verbundmaterial weist quer zur Fertigungsrichtung nebeneinander angeordnete Bereiche mit hohem Dehnungsvermögen und semielastischen Eigenschaften sowie steife Bereiche auf. Die steifen Bereiche werden genutzt, um nach einem Zuschnitt bzw. nach einer Konfektionierung zu Verschlusselementen, beispielsweise Hakentapes, zu befestigen und die zugeschnittenen Verschlusselemente am Windelkörper einer Windel anzubringen. Zur kostengünstigen Fertigung derartiger Verschlusselemente wird ein Verbundmaterial bereitgestellt, das in wechselnder Folge mehrere dehnbare Bereiche mit semielastischen Eigenschaften und steife Bereiche aufweist. Aus dem resultierenden mehrnutzigen Verbundmaterial werden dann die für die Windelherstellung benötigten Verschlusselemente abgetrennt.

Aus EP 1 686 209 A1 ist ein Verbundmaterial bekannt, das Außenschichten aus Vliesstoff sowie zwischen den Vliesstoffaußenschichten einkaschierte Streifen aus einer elastomeren Folie aufweist. Die Folienstreifen sind mit Abstand zueinander zwischen den Außenschichten einkaschiert, wobei die aus Vliesstoff bestehenden Außenschichten in den Abschnitten zwischen den Folienstreifen unmittelbar miteinander verbunden sind. In den Bereichen der elastischen Streifen wird das Verbundmaterial quer zur Fertigungsrichtung verstreckt. Hierbei entstehen aktivierte Bereiche, in denen das Verbundmaterial elastisch ist und ein hohes Dehnungsvermögen aufweist. In den nicht aktivierten Bereichen ist das Verbundmaterial steif. Im Rahmen der bekannten Maßnahmen bestehen die einkaschierten Folienstreifen aus thermoplastischen Elastomeren, z. B. SBS-Blockcopolymeren, SIS-Blockcopolymeren Polyurethanen oder thermoplastischen Polyolefin-Elastomeren. Bei den genannten Polymeren handelt es sich um teure Rohstoffe. Ferner ist die Handhabung von Elastomerfolien im Kaschierprozess schwierig, da elastomere Monofolien klebrig sind und sich bei der Zuführung zum Kaschierwerk in Längsrichtung dehnen. Bei entsprechenden Kaschiergeschwindigkeiten werden die Monofolien in Längsrichtung gedehnt. Nachdem das Laminat verklebt ist, relaxiert die elastische Monofolie, sobald keine Bahnspannung mehr vorhanden ist, was zu einer unkontrollierten und unerwünschten Faltenbildung des Verbundmaterials führt. Um die Monofolie verarbeiten zu können, sind zusätzliche aufwendige Maßnahmen erforderlich, die sich nachteilig auf die Fertigungskosten auswirken.

Ein Verbundmaterial mit den Merkmalen des Oberbegriffes des Patentanspruches 1 ist aus der WO 2007/061486 A1 bekannt. Zur Herstellung des Laminates werden zumindest eine elastische Folie und zumindest eine Außenschicht aus Vliesstoff zugeführt, wobei im gestreckten Zustand der elastischen Folie nicht elastische Regionen gebildet werden, bevor eine Kaschierung mit der zumindest einen Außenschicht aus Vliesstoff erfolgt. Zur Einstellung der elastischen und nicht elastischen Bereiche können insbesondere eine Folie vorgesehen sein, die unter Wärmeeinfluss ein Schrumpfverhalten aufweist. Schließlich ist es auch unmöglich, dass gesamte Verbundmaterial nach der Kaschierung zu verstrecken, wobei dann aber bereits die elastischen und nichtelastischen Bereiche durch die zuvor beschriebenen Maßnahmen erzeugt sind. Die Herstellung des aus der WO 2007/0614861 Kantenverbundmaterials ist vergleichsweise aufwändig, wobei je nach Material der einkaschierten Folie die elastischen Eigenschaften noch verbesserungsbedürftig sind. Aus der US 2003/022582 A1 ist ein Laminat mit einem hohen Dehnungsvermögen bekannt, bei dem zwischen Außenschichten aus Vliesstoff einen Folie einkaschiert ist, welche aus einem mit Metallocen-Katalysatoren hergestellten Polyethylen niedriger Dichte (mPE-LD) gebildet sein kann. Die Ausbildung von Bereichen unterschiedlicher Dehnungseigenschaften ist nicht beschrieben.

Vor diesem Hintergrund liegt der Erfindung die Aufgabe zugrunde, ein für Verschlusselemente an Windeln geeignetes Verbundmaterial mit textiler Oberfläche, hohem Dehnungsvermögen und semielastischen Eigenschaften anzugeben, das aus preiswerten Materialien besteht und kostengünstig gefertigt werden kann.

Gegenstand der Erfindung und Lösung dieser Aufgabe ist ein Verbundmaterial gemäß Patentanspruch 1. Sofern die Polyethylenfolien in Form von Folienstreifen zwischen den Außenschichten einkaschiert ist, beschränkt sich die Aktivierung auf die Bereiche der Folienstreifen. In den dazwischen liegenden Abschnitten sind die Außenschichten un mittelbar miteinander verbunden und bilden nicht aktivierte, steife Bereiche. Sofern zwischen den Außenschichten eine flächige Polyethylenfolie einkaschiert ist, können die Aktivierungsbereiche beliebig nach anwendungstechnischen Gesichtspunkten festgelegt werden. In den nicht aktivierten Bereichen ist der Kaschierverbund steif und kann nur unter Anwendung großer Kräfte gedehnt werden. Durch eine lokale Verstreckung bestehen aktivierte Bereiche, in denen das Verbundmaterial leicht dehnbar und semielastisch ist.

Die Polyethylenfolie besteht aus den Typen PE-LD und PE-LLD. PE-LD ist ein im Hochdruckverfahren hergestelltes verzweigtes Polyethylen mit unterschiedlich langen Verzweigungen, welches im Allgemeinen 8 bis 40 lange, in sich verzweigte Seitenketten, bezogen auf 1000 Kettenglieder, aufweist. PE-LLD ist ein im Niederdruckverfahren hergestelltes lineares Polyethylen, das im Allgemeinen 100 C4 bis C8 Gruppen seitig der Hauptkette, bezogen auf 1000 Kettenglieder, aufweist. PE-LD und PE-LLD können alleine oder in Mischungen eingesetzt worden. Bevorzugt sind Mischungen aus PE-LD und PE- LLD, die sich durch eine hohe Zähigkeit, d. h., hohe Reißdehnung bei geringer Zugfestigkeit, auszeichnet. Unter die genannten Polyethylen-Typen fallen keine Polyethylene, die in die Gruppe der thermoplastischen Polyolefin-Elastomere einzuordnen sind.

Die Polyethylenfolie stabilisiert und verfestigt den Verbundstoff. Ohne die Polyethylenfolie wäre der Vliesstoff entweder zu steif und nicht dehnbar oder würde zu leicht reißen. Durch Verstreckung erhält das erfindungsgemäße Verbundmaterial in den aktivierten Bereichen überraschende Eigenschaften. So weist das Verbundmaterial in den aktivierten Bereichen bei einem hohen Dehnungsvermögen auch semielastische Eigenschaften auf, die aus dem Zusammenwirken der Polyethylenfolie und den aufkaschierten Vliesstoffschichten resultieren und von dem verstreckten Vliesstoff der Außenschichten unterstützt werden. Semielastisch meint, dass das Verbundmaterial beim Gebrauch um ein Mehrfaches der ursprünglichen Länge gedehnt werden kann und sich nach einer Dehnung um zumindest 20 %, bezogen auf die Auslängung, wieder elastisch zurückstellt.

Die Polyethylenfolie zeichnet sich durch eine geringe Foliendicke aus. Bevorzugt ist eine Foliendicke zwischen 10 µm und 15 µm.

Die Semielastizität in den aktivierten Bereichen des Verbundmaterials kann durch eine Beimischung in der Polyethylenfolie durch ein elastomeres Polymer modifiziert werden. Die Elastizität kann insbesondere durch die Beimischung von Polyisobutylen verbessert werden, wobei die Polyethylenfolie eine Beimischung von 0,5 bis 10 Gew.-% Polyisobutylen (PIB) enthalten kann. Vorzugsweise beträgt der Anteil von Polyisobutylen (PIB) in der Polyethylenfolie 0,5 bis 5 Gew.-%. Durch entsprechende Abmischung kann die Semielastizität des Verbundmaterials in den aktivierten Bereichen so verbessert werden, dass das Verbundmaterial sich um bis zu 60 % nach einer Dehnung um 100 % zurückstellt. Ferner können die Eigenschaften der Polyethylenfolie, insbesondere die Zähigkeitswerte, durch eine Beimischung von Ethylenvinylacetat (EVA) oder eines Ethylenvinylacetatcopolymers (EVAC) verbessert werden. Die Beimischung von EVA bzw. EVAC kann bei 5 bis 50 Gew.-% betragen.

Die Außenschichten des Verbundmaterials können aus einem Spinnvliesstoff oder einem kardierten Faservliesstoff bestehen. Als Materialien für die Vliesstoffe kommen insbesondere Polyethylen sowie ferner Polypropylen, Polyamid oder Polyethylenterephthalat in Betracht. Vorteilhaft ist die Verwendung kardierter Faservliesstoffe als Spinnvliesstoffe unterschiedlicher Verfestigungsarten. Diese können z. B. thermobondiert oder wasserstrahlverfestigt sein. Die Außenschichten weisen zweckmäßigerweise ein Flächengewicht zwischen 10 g/m² und 50 g/m² sowie vorzugsweise ein Flächengewicht zwischen 15 g/m² und 30 g/m² auf.

Die Außenschichten und die Polyethylenfolie sind vorzugsweise mittels eines elastischen Hotmelt-Klebstoffes verklebt. Geeignet sind insbesondere Hotmelt-Klebstoffe auf Basis thermoplastischer Elastomere, beispielsweise auf Basis von Styrol-Isopren-Styrol-Blockcopolymeren (SIS). Ein Klebstoffauftrag mit einer Auftragsmenge zwischen 3 g/m² bis 10 g/m² ist ausreichend. Vorzugsweise ist der Klebstoff zumindest in den aktivierten Bereichen in Form von Klebstoffstreifen aufgetragen, die in Fertigungsrichtung des Verbundstoffes verlaufen und quer zur Streckrichtung der Aktivierung ausgerichtet sind. In den nicht aktivierten Klebstoffbereichen kann auch eine flächige Verklebung der Außenschicht untereinander oder mit der Polyethylenfolie erfolgen

Das Verbundmaterial ist vorzugsweise in den aktivierten Bereichen in einer Reckwalzenanordnung verstreckt worden. Die Aktivierung ist durch das Profil der Reckwalzen einstellbar und so zu wählen, dass sich einerseits das gewünschte hohe Dehnungsvermögen einstellt und andererseits die Außenschichten aus Vliesstoff nicht zu sehr zerstört werden.

### Ausführungsbeispiel

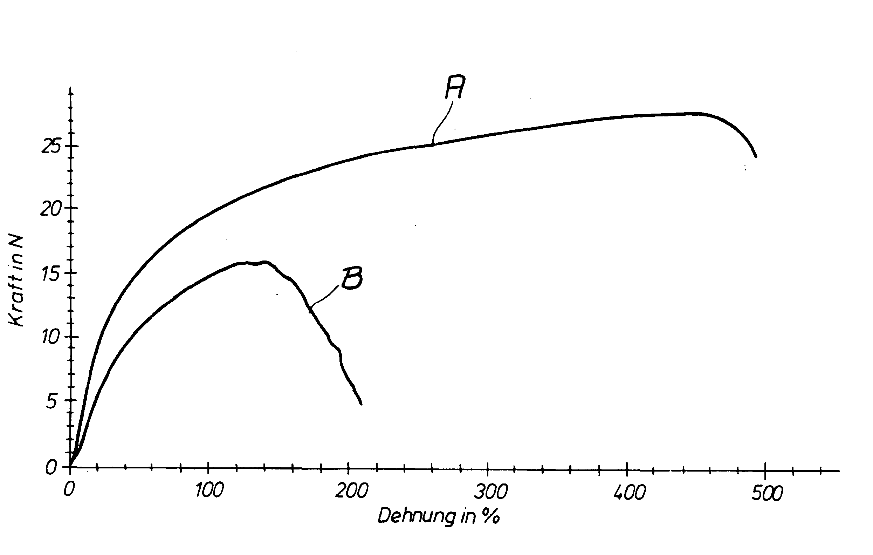

Im Ausführungsbeispiel ist eine Polyethylenfolie aus den Polyethylentypen PE-LD und PE-LLD und einer Beimischung von Polyisobutylen (PIB) gemäß der in Tabelle 1 angegebenen Rezeptur zwischen zwei Außenschichten aus kardiertem Faservliesstoff einkaschiert worden. Die Außenschichten weisen jeweils ein Flächengewicht von 27 g/m² auf und sind mittels eines SIS-Hotmelt-Klebstoffes mit der Polyethylenfolie verklebt. Der Klebstoff ist in einer Menge von 6 g/m² aufgetragen worden. Das Verbundmaterial ist durch eine Reckwalzenanordnung in CD-Richtung, d. h. quer zur Maschinenlaufrichtung, verstreckt worden. Die Dehnung des Verbundmaterials ist in dem in der Figur dargestellten Dehnungsdiagramm als Kurve A dargestellt.

**Tabelle 1:**

| **Gewichtsanteil** | **Polymer** | **Dichte in g/cm³** | **Schmelzindex in g/10min bei 190° C und 2,16 kg** |
|---|---|---|---|
| 30% | PE-LLD (C4) mit 3,4 % PIB | 0,919 | 1,3 |
| 40 % | PE-LLD | 0,920 | 0,9 |
| 30 % | PE-LD | 0,922 | 4,0 |

In einem Vergleichsversuch wurden zwei Nonwovenschichten mit einem Flächengewicht von 27 g/m² unter Verwendung eines SIS-Hotmelt-Klebstoffes miteinander verklebt. Das aus den beiden Nonwovenschichten bestehende Laminat wurde anschließend unter gleichen Bedingungen in einer Reckwalzenanordnung in CD-Richtung aktiviert. Das Dehnungsverhalten dieses Materials ist in der Figur als Dehnungskurve B dargestellt.

Ein Vergleich der Kurven A und B macht deutlich, dass das Verbundmaterial durch die Polyethylenfolie beachtlich stabilisiert und verfestigt wird und sich durch ein hohes Dehnungsvermögen auszeichnet. Es weist überdies im aktivierten Bereich auch semielastische Eigenschaften auf und eignet sich als Material für Verschlusselemente an Windeln.

Nach einer Dehnung um 100 % stellt sich das erfindungsgemäße Laminat um 55 % zurück. Es verbleibt eine Restdehnung von 45 %.

## Patentansprüche

1. Verbundmaterial, insbesondere für Verschlusselemente an Windeln, mit hohem Dehnungsvermögen und semielastischen Eigenschaften, das Außenschichten aus Vliesstoff sowie eine als Streifen oder flächiges Material, welches sich bis zu den Rändern der Außenschichten erstreckt, einkaschierte Polyethylenfolie aus den Polyethylentypen PE-LD und PE-LLD aufweist, wobei das Verbundmaterial in aktiven Bereichen semielastisch dehnbar und in nicht aktiven Bereichen steif ist, **dadurch gekennzeichnet, dass** die Polyethylen-Folie eine Foliendicke zwischen 5 µm und 20 µm aufweist, dass die aktiven Bereiche des Verbundmaterials durch Verstreckung aktiviert sind und dass die Polyethylenfolie eine Beimischung von 0,5 bis 30 Gew.-% Polyisobutylen (PIB) enthält.

2. Verbundmaterial nach Anspruch 1, **dadurch gekennzeichnet, dass** die Polyethylenfolie eine Foliendicke zwischen 10 µm und 15 µm aufweist.

3. Verbundmaterial nach Anspruch 1 oder 2, **dadurch gekennzeichnet, dass** die Polyethylenfolie eine Beimischung von 0,5 bis 10 Gew.-% Polyisobutylen (PIB) enthält.

4. Verbundmaterial nach Anspruch 3, **dadurch gekennzeichnet, dass** der Anteil von Polyisobutylen (PIB) in der Polyethylenfolie 0,5 bis 5 Gew.-% beträgt.

5. Verbundmaterial nach einem der Ansprüche 1 bis 4, **dadurch gekennzeichnet, dass** die Außenschichten aus einem Spinnvliesstoff oder einem kardierten Faservliesstoff bestehen.

6. Verbundmaterial nach einem der Ansprüche 1 bis 5, **dadurch gekennzeichnet, dass** die Außenschichten ein Flächengewicht zwischen 10 g/m² und 50 g/m², vorzugsweise zwischen 20 g/m² und 30 g/m², aufweisen.

7. Verbundmaterial nach einem der Ansprüche 1 bis 6, **dadurch gekennzeichnet, dass** die Außenschichten und die Polyethylenfolie mittels eines elastischen Hotmelt-Klebstoffes verklebt sind.

8. Verbundmaterial nach Anspruch 7, **dadurch gekennzeichnet, dass** der Hotmelt-Klebstoff in einer Auftragsmenge von 3 bis 10 g/m² appliziert ist.

9. Verbundmaterial nach Anspruch 7 oder 8, **dadurch gekennzeichnet, dass** der Klebstoff in Klebstoffstreifen aufgetragen ist, die in Fertigungsrichtung des Verbundstoffes verlaufen und quer zur Streckrichtung der Aktivierung ausgerichtet sind.

10. Verbundmaterial nach einem der Ansprüche 1 bis 9, **dadurch gekennzeichnet, dass** das Verbundmaterial in den aktivierten Bereichen in einer Reckwalzenanordnung verstreckt worden ist.

## Claims

1. A composite material, in particular for nappy closure elements with high tensile strength and semi-elastic properties, which comprises outer layers of a nonwoven as well as a polyethylene film consisting of the polyethylene types PE-LD and PE-LLD, which is laminated in as strips or as a flat material and extends as far as the edges of the outer layers, wherein the composite material is semi-elastically stretchable in active areas and is stiff in non-active areas, **characterised in that** the polyethylene film comprises a film thickness between 5 µm and 20 µm, **in that** the active areas of the composite material are activated by stretching and **in that** the polyethylene film contains an admixture of 0.5 % to 30 %-by-weight polyisobutylen (PIB).

2. The composite material according to claim 1, **characterised in that** the polyethylene film comprises a film thickness of between 10 µm and 15 µm.

3. The composite material according to claim 1 or 2, **characterised in that** the polyethylene film contains an admixture of 0.5 % to 10 %-by-weight polyisobutylen (PIB).

4. The composite material according to claim 3, **characterised in that** the percentage of polyisobutylen (PIB) in the polyethylene film is 0.5 % to 5 %-by-weight.

5. The composite material according to one of claims 1 to 4, **characterised in that** the outer layers consist of a spunbonded nonwoven or a carded nonwoven.

6. The composite material according to one of claims 1 to 5, **characterised in that** the outer layers comprise an areal weight between 10 g/m2 and 50 g/ m2, preferably between 20 g/m2 and 30 g/ m2.

7. The composite material according to one of claims 1 to 6, **characterised in that** the outer layers and the polyethylene film are bonded by means of an elastic hotmelt adhesive.

8. The composite material according to claim 7, **characterised in that** hotmelt adhesive is applied in an amount of 3 to 10 g/m2.

9. The composite material according to claim 7 or 8, **characterised in that** the adhesive is applied in adhesive strips which extend in fabricating direction of the composite material and are aligned transversely to the stretching direction of activation.

10. The composite material according to one of claims 1 to 9, **characterised in that** the composite material has been stretched in the activated areas in a stretching roller arrangement.

## Revendications

1. Matière composite, notamment pour des éléments de fermeture sur des couches-culottes avec un coefficient d'allongement élevé et des propriétés semi-élastiques, qui comporte des couches extérieures en non-tissé, ainsi qu'un film en polyéthylène intégré par contrecollage sous la forme d'un ruban ou d'une matière en nappe qui s'étend jusqu'aux bords des couches extérieures, dans les types de polyéthylène PE-LD ET PE-LLD, dans des zones actives, la matière composite étant semi-élastiquement extensible et étant rigide dans les zones non actives, **caractérisée en ce que** le film en polyéthylène présente une épaisseur de film comprise entre 5 µm et 20 µm, **en ce que** les zones actives de la matière composite sont activées par étirage et **en ce que** le film en polyéthylène contient une incorporation de 0,5 à 30 % en poids de polyisobutylène (PIB).

2. Matière composite selon la revendication 1, **caractérisée en ce que** le film en polyéthylène présente une épaisseur de film comprise entre 10 µm et 15 µm.

3. Matière composite selon la revendication 1 ou la revendication 2, **caractérisée en ce que** le film en polyéthylène contient une incorporation de 0,5 à 10 % en poids de polyisobutylène (PIB).

4. Matière composite selon la revendication 3, **caractérisée en ce que** la part en polyisobutylène (PIB) dans le film en polyéthylène s'élève à de 0,5 à 5 % en poids.

5. Matière composite selon l'une quelconque des revendications 1 à 4, **caractérisée en ce que** les couches extérieures sont constituées d'un filé-lié ou d'un non-tissé cardé.

6. Matière composite selon l'une quelconque des revendications 1 à 5, **caractérisée en ce que** les couches extérieures présentent un grammage compris entre 10 g/m² et 50 g/m², de préférence entre 20 g/m² et 30 g/m².

7. Matière composite selon l'une quelconque des revendications 1 à 6, **caractérisée en ce que** les couches extérieures et le film en polyéthylène sont collés ensemble au moyen d'un adhésif thermofusible élastique.

8. Matière composite selon la revendication 7, **caractérisée en ce que** l'adhésif thermofusible est appliqué selon une quantité d'application de 3 à 10 g/m².

9. Matière composite selon la revendication 7 ou la revendication 8, **caractérisée en ce que** l'adhésif est appliqué en stries d'adhésif qui s'étendent dans le sens de fabrication de la matière composite et qui sont orientées à la transversale du sens d'étirage de l'activation.

10. Matière composite selon l'une quelconque des revendications 1 à 9, **caractérisée en ce que** dans les zones activées, la matière composite a été étirée dans un agencement de laminoirs.
